# EUROPÄISCHE PATENTANMELDUNG

(11) **EP 4 683 155 A1**
(43) Veröffentlichungstag der Anmeldung: **21.01.2026**
(21) Anmeldenummer: 25190084.1
(22) Anmeldetag: 17.07.2025
(51) Int. Cl.: H02J 3/38, H02J 13/00, H02J 3/00

(54) **VERFAHREN ZUR KOORDINATION VON ENERGIESYSTEMEN, STEUERUNGSSYSTEM, COMPUTERPROGRAMMPRODUKT SOWIE COMPUTERLESBARES SPEICHERMEDIUM**

(30) Priorität: 19.07.2024 DE 102024120646
(71) Anmelder: E.ON Digital Technology GmbH, 80992 München (DE)
(72) Erfinder: Oleari, Stefano, 10245 Berlin (DE); Sowa, Torsten, 50181 Bedburg (DE); Genzel, Carl-Heinz, 28199 Bremen (DE); Ryschkewich, Nwehla, 92533 Wernberg-Köblitz (DE); Eggers, Sebastian, 31180 Giesen (DE)
(74) Vertreter: Bals & Vogel Patentanwälte PartGmbB

(57) **Zusammenfassung**

Die Erfindung betrifft ein Verfahren (100) zur Koordination von Energiesystemen (11, 12), umfassend:
- Bündeln (110) von zumindest zwei Energieinformationen (10, 20) zu einer gebündelten Energieinformation (30) eines übergeordneten Energiesystems (31), wobei die zumindest zwei Energieinformationen (10, 20) jeweils zumindest eine Energiemenge umfassen, die durch zumindest ein erstes und zweites Energiesystem (11, 12) innerhalb eines Zeitfensters erzeugt und/oder verbraucht werden kann,
- Erstellen (120) eines Steuerungsplans (40), wobei der Steuerungsplan (40) umfasst, wie viel Energie das übergeordnete Energiesystem (31) innerhalb des Zeitfensters erzeugt und/oder verbraucht, Steuern (130) des übergeordneten Energiesystems (31) gemäß des Steuerungsplans (40).

Ferner betrifft die Erfindung ein Steuerungssystem (200), ein Computerprogrammprodukt sowie ein computerlesbares Speichermedium.

## Beschreibung

Die Erfindung betrifft ein Verfahren zur Koordination von Energiesystemen, ein Steuerungssystem, ein Computerprogrammprodukt sowie ein computerlesbares Speichermedium.

Virtuelle Kraftwerke sind ein elementarer Teil der Energiewirtschaft und werden in vielen Bereichen erfolgreich eingesetzt. Insbesondere größere dezentrale Anlagen, wie Freiflächenanlagen mit Photovoltaik- oder Windkraftanlagen, können als virtuelle Kraftwerke betrieben werden.

Ungeklärt ist die Koordination unterschiedlicher Akteure mit verschiedenen methodischen Ansätzen zur Integration von Kleinstverbrauchern und -erzeugern zu einem gebündelten virtuellen Asset, um dieses in ein virtuelles Kraftwerk zu integrieren. Bei einer Vielzahl von Akteuren, die unterschiedliche Anlagen haben, diese auf unterschiedliche Arten betreiben und IT-technisch anbinden und ihren Kunden auch verschiedene Abrechnungsmodalitäten und Verträge anbieten, ist die Koordination herausfordernd.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, ein Verfahren, ein Steuerungssystem, ein Computerprogrammprodukt sowie ein computerlesbares Speichermedium zur Koordination von Energiesystemen bereitzustellen, bei dem eine solche Koordination unter Wahrung der unterschiedlichen Partikularinteressen sichergestellt werden und ein möglichst sicherer, effizienter Betrieb ermöglicht wird.

Die voranstehende Aufgabe wird gelöst durch ein Verfahren, durch ein Steuerungssystem, durch ein Computerprogrammprodukt sowie durch ein computerlesbares Speichermedium. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Steuerungssystem und/oder im Zusammenhang mit dem erfindungsgemäßen Computerprogrammprodukt und/oder im Zusammenhang mit dem erfindungsgemäßen computerlesbaren Speichermedium und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist ein Verfahren zur Koordination von Energiesystemen, umfassend:
- Bündeln von zumindest zwei Energieinformationen zu einer gebündelten Energieinformation eines übergeordneten Energiesystems, wobei die zumindest zwei Energieinformationen jeweils zumindest eine Energiemenge umfassen, die durch zumindest ein erstes und zweites Energiesystem innerhalb eines Zeitfensters erzeugt und/oder verbraucht werden kann, insbesondere durch eine Steuerungseinheit,
- Erstellen eines Steuerungsplans, wobei der Steuerungsplan umfasst, wie viel Energie das übergeordnete Energiesystem innerhalb des Zeitfensters erzeugt und/oder verbraucht, insbesondere durch die Steuerungseinheit,
- Steuern des übergeordneten Energiesystems gemäß des Steuerungsplans, insbesondere durch die Steuerungseinheit.

Das Verfahren kann als computerimplementiertes Verfahren ausgeführt sein.

Die Verfahrensschritte können zumindest teilweise gleichzeitig und/oder zeitlich nacheinander ablaufen, wobei die Reihenfolge der Verfahrensschritte nicht durch die angegebene Reihenfolge begrenzt ist, sodass einzelne Schritte in unterschiedlicher Reihenfolge durchführbar sind. Ferner können einzelne oder sämtliche Schritte wiederholt durchgeführt werden.

Anders ausgedrückt kann das erfindungsgemäße Verfahren umfassen, dass Daten von zwei Energiesystemen zu einem zusammengesetzten Energiesystem zusammengefasst werden, wobei die Daten zumindest einen Energiefluss für eine bestimmte Zeit umfassen. Basierend auf den Daten, die spezifisch für das zusammengesetzte Energiesystem sind, kann ein Plan zum Steuern des zusammengesetzten Energiesystems erstellt und ausgeführt werden.

Das Verfahren dient der Koordination von Energiesystemen, wobei das Koordinieren zumindest das Sammeln von Informationen oder Steuern der Energiesysteme umfassen kann.

Ein Energiesystem kann als eine Vorrichtung aufgefasst werden, welche dazu geeignet ist, Energie zumindest zu erzeugen, zu speichern oder zu verbrauchen. Die Energie kann zumindest elektrische, thermische, chemische oder mechanische (kinetische oder potentielle) Energie oder zumindest Kernergie oder Strahlungsenergie sein. Ein Energiesystem kann ausschließlich zum Erzeugen, Speichern oder Verbrauchen ausgeführt sein oder zumindest zwei der drei Möglichkeiten bereitstellen. Es kann sich bei dem Energiesystem zumindest um ein Kraftwerk handeln, welches dazu ausgeführt ist, elektrische Energie bereitzustellen. Das Energiesystem kann zumindest als Consumer-, Prosumer- oder Producersystem ausgeführt sein. Ein Consumersystem kann als Energiesystem aufgefasst werden, welches Energie verbraucht. Es kann zumindest als Hausanschluss eines Endverbrauchers oder als elektrischer Verbraucher ausgeführt sein. Ein Prosumersystem kann als ein Energiesystem aufgefasst werden, welches zumindest zum Erzeugen und Verbrauchen, insbesondere auch zum Speichern von Energie ausgeführt sein kann. Das Prosumersystem kann ebenfalls als Hausanschluss ausgeführt sein, wobei an dem Hausanschluss neben zumindest einem Verbraucher auch ein Energieerzeugungssystem, insbesondere eine Photovoltaikanlage, angeschlossen ist. Ein Producersystem kann als Kraftwerk eines Energieunternehmens (z. B. Kohle-, Gas-, Offshore-Windanlage) aufgefasst werden. Energiesysteme können als virtuelle Kraftwerke und/oder gebündelte, insbesondere virtuelle Assets ausgeführt sein.

Das Bündeln kann als Zusammenfassen von zumindest zwei Energieinformationen verstanden werden. Es kann ebenfalls vorgesehen sein, dass drei oder mehr Energieinformationen gebündelt werden. Das Bündeln kann ferner als Aggregation bezeichnet werden. Es kann vorgesehen sein, dass das Bündeln zumindest algorithmisch, insbesondere mit zumindest einem neuronalen Netz, anhand einer Expertenbewertung oder mit einer Heuristik erfolgt.

Es kann vorgesehen sein, dass die zumindest zwei Energieinformationen aus einer Vielzahl von verfügbaren Energieinformationen ausgewählt werden. Die Vielzahl kann sich bestimmen aus sämtlichen Energiesystemen, auf die eine Steuerungseinheit zugreifen kann. Es kann vorgesehen sein, dass die Vielzahl der Energiesysteme gefiltert wird, insbesondere nach der verbrauchten und/oder erzeugten Energiemenge, dem Zeitraum, einer Flexibilität oder einer Entfernung zur Steuerungseinheit.

Die Energieinformation umfasst erfindungsgemäß zumindest eine Energiemenge, die durch das Energiesystem innerhalb eines Zeitfensters erzeugt und/oder verbraucht werden kann. Mit anderen Worten weist die Energieinformation Daten darüber auf, wie viel Energie das Energiesystem innerhalb eines bestimmten Zeitraums erzeugen oder verbrauchen wird. Die Energieinformation könnte also als 2D Vektor aufgefasst werden. Beispielhaft kann die Energieinformation lauten: "20 kWh Erzeugung, 10:10 - 10:20 UTC" (UTC: Universal Time Coordinated). Die Energieinformation kann noch eine Vielzahl weiterer Informationen umfassen. Diese Varianten sind im Zusammenhang mit den Unteransprüchen näher erläutert. Es kann auch vorgesehen sein, dass die Energieinformation, insbesondere die gebündelte Energieinformation, lediglich die Verbräuche und Zeiträume aufweist.

Es kann vorgesehen sein, dass das Bündeln ein Zusammenführen der Energieinformation umfasst. Dabei können insbesondere Verbräuche und Erzeugungen miteinander verrechnet werden. Beispielsweise kann die gebündelte Energieinformation eines Verbrauchs von 10 kWh und einer Erzeugung von 50 kWh gebündelt "40 kWh erzeugte Energie" sein. Das Bündeln kann auch umfassen, überschüssige oder mehrfach gesammelte Informationen zu löschen. So wird verhindert, dass sich bei der Weiterverarbeitung unnötig große Datenmengen ansammeln, was vor allem die Übertragung verbessert.

Das übergeordnete Energiesystem kann auch als virtuelles Energiesystem aufgefasst werden. Das übergeordnete Energiesystem kann so viel Energie produzieren und/oder verbrauchen wie die Summe der einzelnen Energiesysteme, die darin enthalten sind. Durch die Bündelung der Energieinformation wird jedoch das Erstellen eines Steuerungsplans vereinfacht.

Unter einer Energiemenge kann eine Angabe über eine Menge einer Energie aufgefasst werden, wobei insbesondere die Form sich nach der Art der Energie richten kann. Es kann ebenfalls vorgesehen sein, dass die Energiemenge in einem von der Energieart unabhängigen Äquivalent angegeben wird. Das unabhängige Äquivalent kann in der Einheit Wattstunden (Wh) angegeben werden.

Das Zeitfenster kann einen Startzeitpunkt und einen Endzeitpunkt umfassen. Anders ausgedrückt kann das Zeitfenster eine Dauer (etwa 30 Minuten) sowie einen Zeitpunkt dieser Dauer umfassen (z. B. ab 13:00 Uhr UTC). Es kann vorgesehen sein, dass das Zeitfenster als kurzfristiges Zeitfenster ausgeführt ist (z. B. Handel auf dem Intradaymarkt auch Intraday genannt). Das kurzfristige Zeitfenster kann eine Dauer umfassen, die weniger als 24 Stunden, insbesondere weniger als eine Stunde, bevorzugt weniger als 20 Minuten in der Zukunft liegt. Alternativ oder in Ergänzung kann das Zeitfenster ein langfristiges Zeitfenster ausgeführt sein (auch day ahead genannt). Das langfristige Zeitfenster kann eine Dauer umfassen, die mehr als 24 h in der Zukunft liegt. Die Dauer kann einen Zeitraum von weniger als zwei Stunden, bevorzugt eine Stunde, oder weniger als 30 min betragen.

Ein Steuerungsplan umfasst, wie viel Energie das übergeordnete Energiesystem innerhalb des Zeitfensters erzeugt und/oder verbraucht. Der Steuerungsplan kann genau der gebündelten Energieinformation entsprechen, sodass die Energiemenge der zumindest zwei Energiesysteme entsprechend der Energieinformation verbraucht und/oder erzeugt wird. Es kann aber ebenfalls vorgesehen sein, dass gemäß des Steuerungsplans weniger oder mehr Energie durch das übergeordnete Energiesystem verbraucht und/oder erzeugt wird, als in der gebündelten Energieinformation vorgesehen ist. In das Erstellen des Steuerungsplans kann die gebündelte Energieinformation einfließen. Es ist denkbar, dass weitere Informationen, etwa Randbedingungen des Netzes, weitere Energieinformationen oder weitere gebündelte Energieinformationen, beim Erstellen des Steuerungsplans berücksichtigt werden. Der Steuerungsplan kann ferner Anweisungen an das übergeordnete Energiesystem und/oder das erste und/oder zweite Energiesystem umfassen, insbesondere für ein Starten und/oder Stoppen eines Energieverbrauchs und/oder einer Energieerzeugung. Die Anweisungen können bevorzugt in einem Protokoll vorliegen, welches von dem übergeordneten Energiesystem und/oder durch das erste und/oder zweite Energiesystem interpretierbar ist, ohne dass eine Umwandlung erfolgen muss.

Das Steuern kann das Senden eines Steuerbefehls umfassen, der dazu ausgeführt ist, das übergeordnete Energiesystem und/oder das erste und/oder zweite Energiesystem zu veranlassen, entsprechend dem Steuerplan Energie bereitzustellen oder zu verbrauchen. Es ist denkbar, dass ein Steuerplanprotokoll vorgesehen ist, welches dazu geeignet ist, über zumindest zwei Energienetzsystemebenen hinweg Energiesysteme zu steuern.

Die Schritte des Verfahrens können durch eine Steuerungseinheit ausgeführt werden. Bei der Steuerungseinheit kann es sich zumindest um eine, insbesondere auf einer Energienetzsystemebene angeordneten, Recheneinheit oder einen Cloud-Dienst handeln.

Insgesamt wird durch das erfindungsgemäße Verfahren der Vorteil erreicht, dass eine Koordination von Energiesystemen bereitgestellt wird, bei dem eine Koordination unter Wahrung unterschiedlicher Partikularinteressen sichergestellt wird und ein möglichst sicherer, effizienter Betrieb ermöglicht wird. Das Bündeln der Energieinformationen von zumindest zwei Energiesystemen bietet die Möglichkeit, die für die Koordination relevanten Informationen zu sammeln und so aufzubereiten, dass diese weiterverarbeitet werden können. Dabei wird ein übergeordnetes Energiesystem auf Basis der Energieinformationen des zumindest ersten und zweiten Energiesystems erzeugt, welches die Verbräuche und Erzeugungen der Energiesysteme virtuell zusammenfassend abbildet. Der Steuerungsplan, welcher insbesondere auf der gebündelten Energieinformation basiert, legt dann fest, wie viel Energie das übergeordnete Energiesystem im Zeitfenster verbraucht und/oder erzeugt. Hierbei kann eine Vielzahl von Optimierungstechniken zum Einsatz kommen, um sowohl die Sicherheit als auch die Effizienz des Betriebs des übergeordneten Energiesystems zu gewährleisten und gleichzeitig die Partikularinteressen der einzelnen (ersten und zweiten) Energiesysteme zu berücksichtigen. Entsprechend des Steuerplans wird dann das übergeordnete Energiesystem gesteuert.

Im Rahmen der Erfindung kann es von Vorteil sein, dass das erste Energiesystem sich vom zweiten Energiesystem zumindest bezüglich der Energiemenge, einer Art der Energieerzeugung, oder einer Energienetzsystemebene unterscheidet. Mit einer Energienetzsystemebene kann insbesondere eine Stromnetzsystemebene gemeint sein. Eine Stromnetzsystemebene kann zumindest als ein Niederspannungsnetz, ein Mittelspannungsnetz, ein Hochspannungsnetz oder ein Höchstspannungsnetz ausgeführt sein. Es ist denkbar, dass der Übergang von einer Energienetzsystemebene zur nächsten immer einen Trafo und/oder ein Umspannwerk aufweist. Alternativ oder in Ergänzung dazu kann die Energienetzsystemebene auch zumindest eine lokale Verteilnetzebene, insbesondere mit Spannungen von weniger als 1 kV, eine regionale Verteilnetzebene, insbesondere mit Spannungen von 1 bis 36 kV, eine überregionale Verteilnetzebene, insbesondere mit Spannungen von mehr als 26 kV bis weniger als 220 kV oder ein Übertragungsnetz, insbesondere mit Spannungen von mehr als 220 kV, aufweisen. Die Art der Energieerzeugung kann sich darin unterscheiden, ob sie regenerativ ist oder fossil. Besonders vorteilhaft ist, dass gemäß des Verfahrens die unterschiedlichsten Energiesysteme miteinander verknüpft werden können. Beispielsweise eine Flotte von Elektrofahrzeugen, die Energie verbrauchen oder an das Netz abgeben können mit Windkraftanlagen oder Gaskraftwerken.

Im Rahmen der Erfindung ist es denkbar, dass ein Versenden des Steuerungsplans, insbesondere an eine obere Steuerungseinheit, von einer Steuerungseinheit vorgesehen ist. Das Verfahren kann prinzipiell einstufig ausgeführt sein, das heißt, dass nur einmal ein Bündeln, ein Erstellen eines Steuerplans und das Steuern vorgesehen ist. Besonders vorteilhaft ist es jedoch, wenn der Steuerungsplan an eine nächsthöhere Instanz versendet wird, welche insbesondere Zugriff auf zumindest zwei Steuerpläne hat. Dann kann auf der nächsthöheren Ebene eine Koordination und Optimierung vorgenommen werden, wodurch die Steuerung weiter verbessert werden kann.

Es kann im Rahmen der Erfindung vorgesehen sein, dass ein Steuern einer Steuerungseinheit durch eine obere Steuerungseinheit vorgesehen ist. Eine obere Steuerungseinheit kann prinzipiell genauso ausgebildet sein wie eine Steuerungseinheit. Die obere Steuerungseinheit kann sich jedoch zumindest dadurch auszeichnen, dass diese die Steuerungseinheit steuert. Durch die Hierarchie an Steuerungseinheiten kann erreicht werden, dass mehr Daten bei der Steuerung von Energiesystemen berücksichtigt werden können. Andererseits ist es so auch möglich, dass untergeordnete Steuerungseinheiten immer noch effizient die Energiesysteme steuern können, wenn die obere Steuerungseinheit gerade nicht die Steuerung übernimmt. Das Steuern kann durch das Senden von zumindest einem Steuerbefehl, über eine Vielzahl von Protokollen, insbesondere TCP-IP, erfolgen.

Es ist ferner denkbar, dass die Energieinformation und/oder die gebündelte Energieinformation zumindest eine erweiterte Energieinformation umfasst, wobei insbesondere die erweiterte Energieinformation zumindest ein Flexibilitätspotential, einen erwarteten Prognosefehler, einen Verlauf der erzeugten und/oder verbrauchten Energiemenge innerhalb des Zeitfensters oder eine Netzrandbedingung umfasst. Die erweiterte Energieinformation kann auch als Randbedingung aufgefasst werden. Durch diese erweiterte Energieinformation kann die Qualität der Erstellung des Steuerplans und die Effizienz und Sicherheit beim Steuern erheblich verbessert werden.

Ein Flexibilitätspotential kann beispielsweise angeben, wie viel Energie bereitgestellt oder verbraucht werden könnte. Beispielsweise kann eine Flotte von Elektrofahrzeugen bei mittlerem Ladestatus entweder geladen oder entladen werden. Sollte also gleichzeitig eine Energieinformation eines anderen Energiesystems einen hohen Verbrauch im Zeitfenster haben, kann es günstiger sein, die Flotte von Elektrofahrzeugen etwas zu entladen, um den Verbrauch des anderen Energiesystems auszugleichen. Wenn stattdessen eine besonders hohe Energieproduktion wegen eines starken Windes oder Sonneneinstrahlung erwartet wird, kann es günstiger sein, die Akkus der Elektrofahrzeuge zu laden.

Ein Prognosefehler kann den sicheren Betrieb der Energiesysteme weiter verbessern. Beispielsweise kann je nach Wetter die Produktion von Energie durch Wind- oder Solaranlagen stark schwanken. Dabei kann die Genauigkeit der Wettervorhersage in den Prognosefehler einfließen. Diese ist in der Regel kurzfristig wesentlich genauer als langfristig. Darüber hinaus kann der Prognosefehler reduziert sein, wenn besonders viele Systeme zusammengefasst werden. Eine Balkonanlage kann bereits abgeschattet werden, wenn nur eine einzelne Wolke am Himmel ist oder diese beispielsweise von Schnee bedeckt wird. Dass dies bei tausenden Anlagen gleichzeitig passiert, ist wesentlich weniger wahrscheinlich. Wird dieser Prognosefehler übermittelt, kann der Steuerungsplan mit bedeutend größerer Sicherheit erstellt werden.

Wird nicht nur ein Wert für das Zeitfenster, sondern auch ein Verlauf der erzeugten und/oder verbrauchten Energiemenge innerhalb des Zeitfensters übermittelt, kann der Steuerungsplan genauer und effektiver erstellt werden. Der Verlauf kann ein Zeitraster zumindest von einer Stunde, einer Minute oder einer Sekunde aufweisen.

Durch Netzrandbedingungen können weitere Informationen für die Erstellung des Steuerungsplans und die Steuerung bereitgestellt und berücksichtigt werden. Beispielsweise kann eine Netzrandbedingung eine maximale abgebbare oder empfangbare Strommenge umfassen. Diese kann beispielsweise durch die Art der Übertragung bedingt sein. Minimal-, oder Maximalspannungen und/oder Ströme können ebenfalls Netzrandbedingungen sein.

Auch ist es denkbar, dass das Steuern zumindest durch diejenige Steuerungseinheit erfolgt, welche innerhalb einer Hierarchie von Steuerungseinheiten, welche gebildet wird durch ein Versenden des Steuerungsplans von einer unteren Steuerungseinheit an eine obere Steuerungseinheit, am höchsten angeordnet ist. Dadurch wird gewährleistet, dass immer diejenige Steuerungseinheit die Steuerung vornimmt, welche zurzeit die meisten Informationen vorliegen hat und damit auch die effizienteste und sicherste Koordination der Energiesysteme vornehmen kann.

Im Rahmen der Erfindung ist es optional möglich, dass ein Empfangen des Steuerungsplans durch eine obere Steuerungseinheit und/oder ein Erstellen eines oberen Steuerungsplans vorgesehen ist, wobei der obere Steuerungsplan zumindest einen Steuerungsplan, insbesondere zumindest zwei Steuerungspläne von unterschiedlichen Steuerungseinheiten, berücksichtigt. Durch das Empfangen des Steuerungsplans durch eine obere Steuerungseinheit stehen dieser oberen Steuerungseinheit mehr Informationen zur Verfügung, welche diese zur Verbesserung des Erstellens eines oberen Steuerungsplans nutzen kann. Alternativ oder in Ergänzung kann durch die obere Steuerungseinheit auch eine gebündelte Energieinformation empfangen und mit gleichem Vorteil eingesetzt werden.

Die obenstehende Aufgabe wird ferner gelöst durch ein erfindungsgemäßes Steuerungssystem für die Steuerung von Energiesystemen, aufweisend:
- eine Steuerungseinheit, die dazu ausgeführt ist,
   - zumindest zwei Energieinformationen zu einer gebündelten Energieinformation eines übergeordneten Energiesystems zu bündeln, wobei die zumindest zwei Energieinformationen jeweils zumindest eine Energiemenge umfassen, die durch zumindest ein erstes und zweites Energiesystem innerhalb eines Zeitfensters erzeugt und/oder verbraucht werden kann,
   - einen Steuerungsplan zu erstellen, wobei der Steuerungsplan umfasst, wie viel Energie das übergeordnete Energiesystem innerhalb des Zeitfensters erzeugt und/oder verbraucht, und
   - den Steuerungsplan an eine obere Steuerungseinheit zu versenden, sowie
- eine obere Steuerungseinheit, die dazu ausgeführt ist, den Steuerungsplan zu empfangen und einen oberen Steuerungsplan zu erstellen.

Damit ergeben sich in Bezug auf ein erfindungsgemäßes Steuerungssystem die gleichen Vorteile, wie sie bereits in Bezug auf ein erfindungsgemäßes Verfahren beschrieben worden sind.

Ferner kann es im Rahmen der Erfindung vorgesehen sein, dass die Steuerungseinheit und/oder die obere Steuerungseinheit eine Kommunikationsschnittstelle aufweist, welche dazu ausgeführt ist, eine Kommunikation zwischen der Steuerungseinheit und der oberen Steuerungseinheit bereitzustellen. Die Kommunikationsschnittstelle kann je nach Ausgestaltung der Steuerungseinheit an diese angepasst sein, beispielsweise als Ethernet, Wide Area Network, Smart Meter Gateway, Bluetooth oder WLAN.

Die obenstehende Aufgabe wird ferner gelöst durch ein erfindungsgemäßes Computerprogrammprodukt, umfassend Befehle, die bei der Ausführung des Programms durch einen Computer, insbesondere durch eine Steuerungseinheit und/oder die obere Steuerungseinheit eines erfindungsgemäßen Steuerungssystems, diesen veranlassen, ein erfindungsgemäßes Verfahren auszuführen.

Damit ergeben sich in Bezug auf ein erfindungsgemäßes Computerprogrammprodukt die gleichen Vorteile, wie sie bereits in Bezug auf ein erfindungsgemäßes Verfahren und/oder ein erfindungsgemäßes Steuerungssystem beschrieben worden sind.

Die obenstehende Aufgabe wird ferner gelöst durch ein erfindungsgemäßes computerlesbares Speichermedium, umfassend Befehle, die bei der Ausführung durch einen Computer, insbesondere durch eine Steuerungseinheit und/oder die obere Steuerungseinheit eines erfindungsgemäßen Steuerungssystems, diesen veranlassen, ein erfindungsgemäßes Verfahren auszuführen.

Damit ergeben sich in Bezug auf ein erfindungsgemäßes computerlesbares Speichermedium die gleichen Vorteile, wie sie bereits in Bezug auf ein erfindungsgemäßes Verfahren und/oder ein erfindungsgemäßes Steuerungssystem und/oder ein erfindungsgemäßes Computerprogrammprodukt beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
Fig. 1 eine Übersicht eines Verfahrens zur Koordination von Energiesystemen,
Fig. 2 eine Übersicht eines Steuerungssystems,
Fig. 3 eine Übersicht einer gebündelten Energieinformation,
Fig. 4 Teile eines Verfahrens zur Koordination von Energiesystemen,
Fig. 5 ein Verhältnis zwischen Steuerungseinheiten, und
Fig. 6 eine Darstellung von Energieinformationen.

In den nachfolgenden Figuren werden für die gleichen technischen Merkmale, auch von unterschiedlichen Ausführungsbeispielen, die identischen Bezugszeichen verwendet.

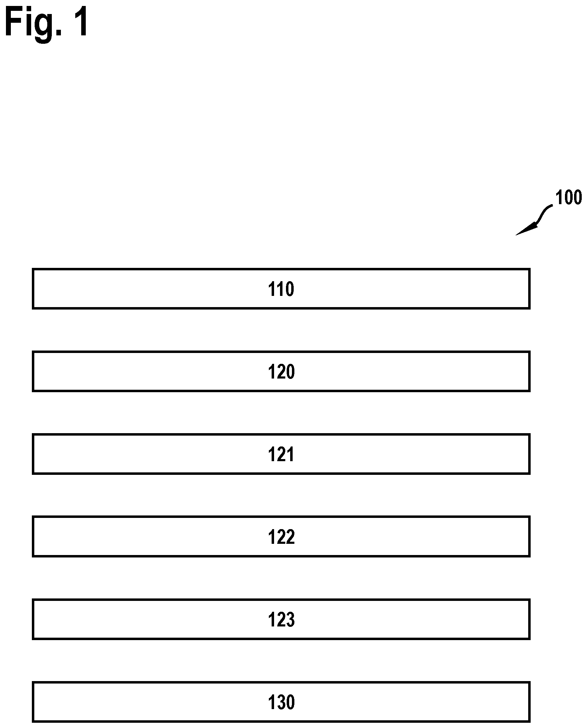

Die Fig. 1 zeigt eine Übersicht eines Verfahrens 100 zur Koordination von Energiesystemen 11, 12, umfassend:
- Bündeln 110 von zumindest zwei Energieinformationen 10, 20 zu einer gebündelten Energieinformation 30 eines übergeordneten Energiesystems 31, wobei die zumindest zwei Energieinformationen 10, 20 jeweils zumindest eine Energiemenge umfassen, die durch zumindest ein erstes und zweites Energiesystem 11, 12 innerhalb eines Zeitfensters erzeugt und/oder verbraucht werden kann,
- Erstellen 120 eines Steuerungsplans 40, wobei der Steuerungsplan 40 umfasst, wie viel Energie das übergeordnete Energiesystem 31 innerhalb des Zeitfensters erzeugt und/oder verbraucht, Steuern 130 des übergeordneten Energiesystems 31 gemäß des Steuerungsplans 40.

Insgesamt wird durch das erfindungsgemäße Verfahren 100 der Vorteil erreicht, dass eine Koordination von Energiesystemen 11, 12 bereitgestellt wird, bei dem eine Koordination unter Wahrung unterschiedlicher Partikularinteressen sichergestellt werden und ein möglichst sicherer, effizienter Betrieb ermöglicht wird. Das Bündeln 110 der Energieinformationen 10, 20 von zumindest zwei Energiesystemen 11, 12 bietet die Möglichkeit, die für die Koordination relevanten Informationen zu sammeln und so aufzubereiten, dass diese weiterverarbeitet werden können. Dabei wird ein übergeordnetes Energiesystem 31 auf Basis der Energieinformationen 10, 20 des zumindest ersten und zweiten Energiesystems 11, 12 erzeugt, welches die Verbräuche und Erzeugungen der Energiesysteme virtuell zusammenfassend abbildet. Der Steuerungsplan 40, welcher insbesondere auf der gebündelten Energieinformation 30 basiert, legt dann fest, wie viel Energie das übergeordnete Energiesystem 31 im Zeitfenster verbraucht und/oder erzeugt. Hierbei kann eine Vielzahl von Optimierungstechniken zum Einsatz kommen, um sowohl die Sicherheit als auch die Effizienz des Betriebs des übergeordneten Energiesystems 31 zu gewährleisten und gleichzeitig die Partikularinteressen der einzelnen (ersten und zweiten) Energiesysteme 11, 12 zu berücksichtigen. Entsprechend des Steuerplans 40 wird dann das übergeordnete Energiesystem 31 gesteuert.

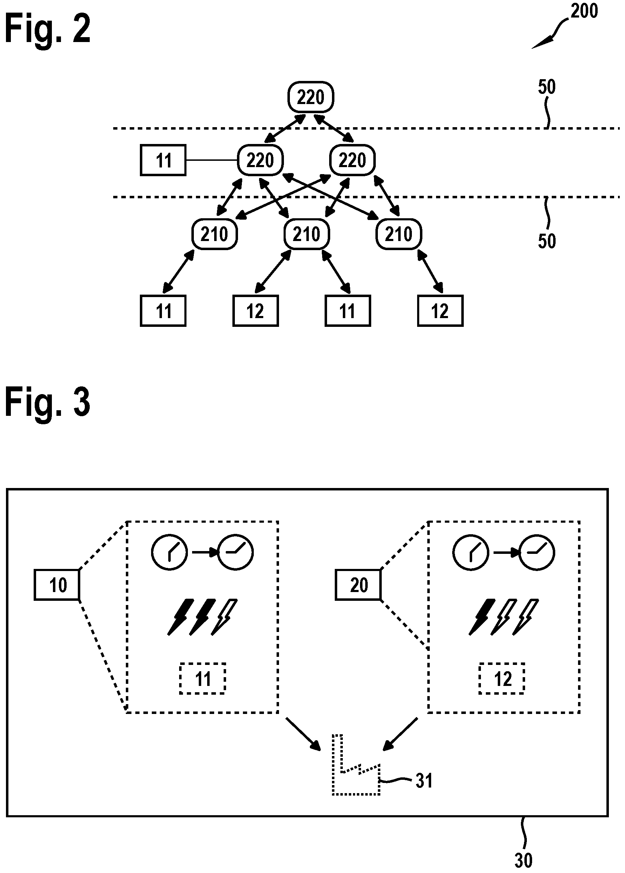

Fig. 2 zeigt ein Steuerungssystem 200 für die Steuerung von Energiesystemen, welches ebenfalls die Aufgabe löst. Das Steuerungssystem 200 hat
- eine Steuerungseinheit 210, die dazu ausgeführt ist,
   - zumindest zwei Energieinformationen zu einer gebündelten Energieinformation 30 eines übergeordneten Energiesystems 31 zu Bündeln 110, wobei die zumindest zwei Energieinformationen jeweils zumindest eine Energiemenge umfassen, die durch zumindest ein erstes und zweites Energiesystem 12 innerhalb eines Zeitfensters erzeugt und/oder verbraucht werden kann,
   - einen Steuerungsplan 40 zu erstellen 120, wobei der Steuerungsplan 40 umfasst, wie viel Energie das übergeordnete Energiesystem 31 innerhalb des Zeitfensters erzeugt und/oder verbraucht, und
   - den Steuerungsplan 40 an eine obere Steuerungseinheit 220 zu versenden 121, sowie
- eine obere Steuerungseinheit 220, die dazu ausgeführt ist, den Steuerungsplan 40 zu empfangen 122 und einen oberen Steuerungsplan 41 zu erstellen 120.

Damit ergeben sich in Bezug auf ein erfindungsgemäßes Steuerungssystem 200 die gleichen Vorteile, wie sie bereits in Bezug auf ein erfindungsgemäßes Verfahren 100 beschrieben worden sind.

Im Rahmen der Erfindung kann es von Vorteil sein, dass, wie Fig. 2 schematisch in einer Übersicht darstellt, sich das erste Energiesystem 11 vom zweiten Energiesystem 12 zumindest bezüglich der Energiemenge, einer Art der Energieerzeugung oder einer Energienetzsystemebene 50 unterscheidet. Mit einer Energienetzsystemebene 50 kann insbesondere eine Stromnetzsystemebene gemeint sein. Eine Stromnetzsystemebene kann zumindest als ein Niederspannungsnetz, ein Mittelspannungsnetz, ein Hochspannungsnetz oder ein Höchstspannungsnetz ausgeführt sein. Es ist denkbar, dass der Übergang von einer Energienetzsystemebene 50 zur nächsten zumindest einen Trafo und/oder ein Umspannwerk aufweist. Alternativ oder in Ergänzung dazu kann die Energienetzsystemebene 50 auch zumindest eine lokale Verteilnetzebene, insbesondere mit Spannungen von weniger als 1 kV, eine regionale Verteilnetzebene, insbesondere mit Spannungen von 1 bis 36 kV, eine überregionale Verteilnetzebene, insbesondere mit Spannungen von mehr als 26 kV bis weniger als 220 kV oder ein Übertragungsnetz, insbesondere mit Spannungen von mehr als 220 kV, aufweisen. Die Art der Energieerzeugung kann sich darin unterscheiden, ob sie regenerativ ist oder fossil. Besonders vorteilhaft ist, dass gemäß des Verfahrens 100 die unterschiedlichsten Energiesysteme 11, 12 miteinander verknüpft werden können. Beispielsweise eine Flotte von Elektrofahrzeugen, die Energie verbrauchen oder an das Netz abgeben können mit Windkraftanlagen oder Gaskraftwerken.

Fig. 3 zeigt eine gebündelte Energieinformation 30 im Detail. Gezeigt ist, dass gemäß einer ersten Energieinformation 10 ein erstes Energiesystem 11 etwas mehr Energie bereitstellen kann als ein zweites Energiesystem 12 gemäß der zweiten Energieinformation 20, und zwar in einem (hier gemeinsamen) Zeitfenster. Diese erste und zweite Energieinformation 10, 20 werden zu einer gebündelten Energieinformation 30 zusammengefasst. Dadurch entsteht ein übergeordnetes Energiesystem 31, welches sich wie eine Art virtuelles Kraftwerk verhalten kann.

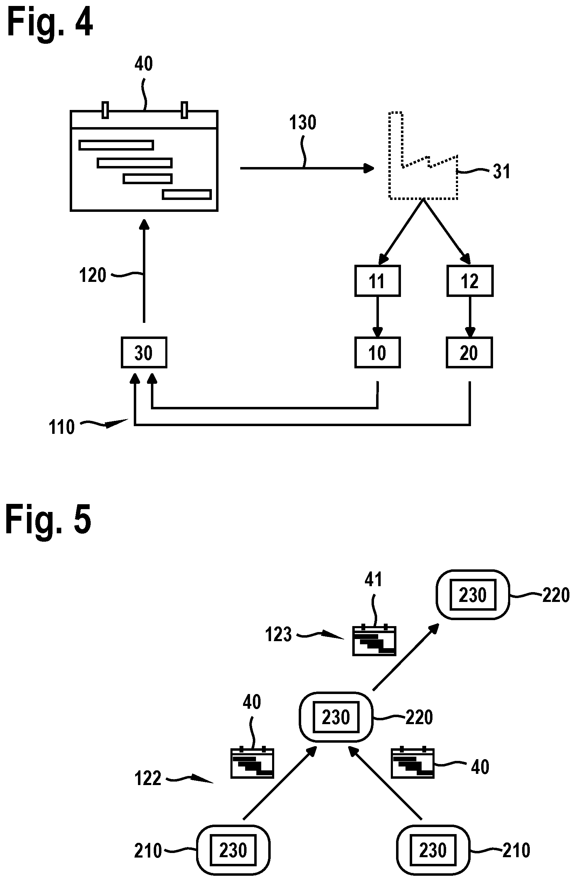

In der Fig. 4 ist dies noch einmal im Zusammenhang mit dem Verfahren 100 gezeigt. Das erste und zweite Energiesystem 11, 12 definieren die erste und zweite Energieinformation 10, 120, welche zu einer gebündelten Energieinformation 30 gebündelt 110 werden. Darauf basierend wird ein Steuerungsplan 40 erstellt 120, wobei der Steuerungsplan 40 umfasst, wie viel Energie das übergeordnete Energiesystem 31 innerhalb des Zeitfensters erzeugt und/oder verbraucht. Schließlich kann anhand des Steuerungsplans 40 ein Steuern 130 des übergeordneten Energiesystems 31 erfolgen, wobei insbesondere die Steuerbefehle an das erste und zweite Energiesystem 11, 12 durchgereicht werden.

Wie in Fig. 1 in Zusammenschau mit Fig. 2 dargestellt kann es im Rahmen der Erfindung denkbar sein, dass ein Versenden 121 des Steuerungsplans 40, insbesondere an eine obere Steuerungseinheit 220, von einer Steuerungseinheit 210 vorgesehen ist. Das Verfahren 100 kann prinzipiell einstufig ausgeführt sein, das heißt, dass nur einmal ein Bündeln 110, ein Erstellen 120 eines Steuerplans und das Steuern 130 vorgesehen ist. Besonders vorteilhaft ist es jedoch, wenn der Steuerungsplan 40 an eine nächsthöhere Instanz versendet wird, welche insbesondere Zugriff auf zumindest zwei Steuerpläne hat. Die ist in der Fig. 5 gezeigt. Dann kann auf der nächsthöheren Ebene eine Koordination und Optimierung vorgenommen werden, wodurch die Steuerung weiter verbessert werden kann.

Es kann im Rahmen der Erfindung vorgesehen sein, dass ein Steuern 130 einer Steuerungseinheit 210 durch eine obere Steuerungseinheit 220 vorgesehen ist. Eine obere Steuerungseinheit 220 kann prinzipiell genauso ausgebildet sein wie eine Steuerungseinheit 210. Die obere Steuerungseinheit 220 kann sich jedoch zumindest dadurch auszeichnen, dass diese die Steuerungseinheit 210 steuert. Durch die Hierarchie an Steuerungseinheiten 210 kann erreicht werden, dass mehr Daten bei der Steuerung von Energiesystemen berücksichtigt werden können. Andererseits ist es so auch möglich, dass untergeordnete Steuerungseinheiten 210 immer noch effizient die Energiesysteme steuern 130 können, wenn die obere Steuerungseinheit 220 gerade nicht die Steuerung übernimmt. Das Steuern 130 kann durch das Senden von zumindest einem Steuerbefehl, über eine Vielzahl von Protokollen, insbesondere TCP-IP, erfolgen.

Auch ist es denkbar, dass das Steuern 130 zumindest durch diejenige Steuerungseinheit 210 erfolgt, welche innerhalb einer Hierarchie von Steuerungseinheiten 210, welche gebildet wird durch ein Versenden 121 des Steuerungsplans 40 von einer unteren Steuerungseinheit 210 an eine obere Steuerungseinheit 220, am höchsten angeordnet ist. Dadurch wird gewährleistet, dass immer diejenige Steuerungseinheit 210 die Steuerung vornimmt, welche zurzeit die meisten Informationen vorliegen hat und damit auch die effizienteste und sicherste Koordination der Energiesysteme vornehmen kann.

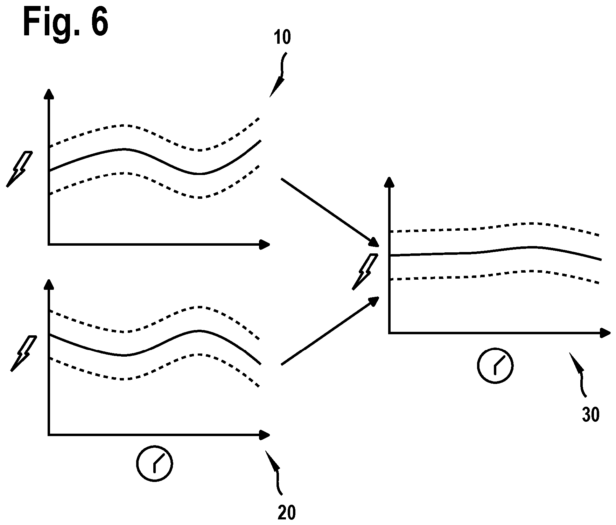

Mögliche Inhalte der Energieinformation sind beispielhaft in Fig. 6 dargestellt. Es ist etwa denkbar, dass die Energieinformation und/oder die gebündelte Energieinformation 30 zumindest eine erweiterte Energieinformation umfasst, wobei insbesondere die erweiterte Energieinformation zumindest ein Flexibilitätspotential, einen erwarteten Prognosefehler, einen Verlauf der erzeugten und/oder verbrauchten Energiemenge innerhalb des Zeitfensters, oder eine Netzrandbedingung umfasst. Die erweiterte Energieinformation kann auch als Randbedingung aufgefasst werden. Durch diese erweiterte Energieinformation kann die Qualität der Erstellung des Steuerplans und die Effizienz und Sicherheit beim Steuern 130 erheblich verbessert werden.

Wird nicht nur ein Wert für das Zeitfenster, sondern, wie in Fig. 6 gezeigt, ein Verlauf der erzeugten und/oder verbrauchten Energiemenge innerhalb des Zeitfensters übermittelt, kann der Steuerungsplan 40 genauer und effektiver erstellt werden. Der Verlauf kann ein Zeitraster zumindest von einer Stunde, einer Minute oder einer Sekunde aufweisen.

Ein Flexibilitätspotential, welches in Fig. 6 etwa den gestrichelten Linien entsprechen kann, kann beispielsweise angeben, wie viel Energie bereitgestellt oder verbraucht werden könnte. Beispielsweise kann eine Flotte von Elektrofahrzeugen bei mittlerem Ladestatus entweder geladen oder entladen werden. Sollte also gleichzeitig eine Energieinformation eines anderen Energiesystems einen hohen Verbrauch im Zeitfenster haben, kann es günstiger sein, die Flotte von Elektrofahrzeugen etwas zu entladen, um den Verbrauch des anderen Energiesystems auszugleichen. Wenn stattdessen eine besonders hohe Energieproduktion wegen eines starken Windes oder Sonneneinstrahlung erwartet wird, kann es günstiger sein, die Akkus der Elektrofahrzeuge zu laden.

Ein Prognosefehler kann den sicheren Betrieb der Energiesysteme weiter verbessern. Auch der mögliche Fehler könnte in Fig. 6 den gestrichelten Linien entsprechen. Beispielsweise kann je nach Wetter die Produktion von Energie durch Wind- oder Solaranlagen stark schwanken. Dabei kann die Genauigkeit der Wettervorhersage in den Prognosefehler einfließen. Diese ist in der Regel kurzfristig wesentlich genauer als langfristig. Darüber hinaus kann der Prognosefehler reduziert sein, wenn besonders viele Systeme zusammengefasst werden. Eine Balkonanlage kann bereits abgeschattet werden, wenn nur eine einzelne Wolke am Himmel ist oder diese beispielsweise von Schnee bedeckt wird. Dass dies bei tausenden Anlagen gleichzeitig passiert, ist wesentlich weniger wahrscheinlich. Wird dieser Prognosefehler übermittelt, kann der Steuerungsplan 40 mit bedeutend größerer Sicherheit erstellt werden.

Durch Netzrandbedingungen können weitere Informationen für die Erstellung des Steuerungsplans 40 und die Steuerung bereitgestellt und berücksichtigt werden. Beispielsweise kann eine Netzrandbedingung eine maximale abgebbare oder empfangbare Strommenge umfassen. Diese kann beispielsweise durch die Art der Übertragung bedingt sein. Minimal-, oder Maximalspannungen und/oder Ströme können ebenfalls Netzrandbedingungen sein.

In der Fig. 5 ist dargestellt, dass ein Empfangen 122 des Steuerungsplans 40 durch eine obere Steuerungseinheit 220 und/oder ein Erstellen 120 eines oberen Steuerungsplans 40 vorgesehen sein kann, wobei der obere Steuerungsplan 41 zumindest einen Steuerungsplan 40, insbesondere zumindest zwei Steuerungspläne von unterschiedlichen Steuerungseinheiten 210, berücksichtigt. Durch das Empfangen 122 des Steuerungsplans 40 durch eine obere Steuerungseinheit 220 stehen dieser oberen Steuerungseinheit 220 mehr Informationen zur Verfügung, welche diese zur Verbesserung beim Erstellen 120 eines oberen Steuerungsplans 40 nutzen kann. Alternativ oder in Ergänzung kann durch die obere Steuerungseinheit 220 auch eine gebündelte Energieinformation 30 empfangen 122 und mit gleichem Vorteil eingesetzt werden.

In der Fig. 5 ist ferner dargestellt, dass vorgesehen sein kann, dass die Steuerungseinheit 210 und/oder die obere Steuerungseinheit 220 eine Kommunikationsschnittstelle 230 aufweist, welche dazu ausgeführt ist, eine Kommunikation zwischen der Steuerungseinheit 210 und der oberen Steuerungseinheit 220 bereitzustellen. Die Kommunikationsschnittstelle 230 kann je nach Ausgestaltung der Steuerungseinheit 210 an diese angepasst sein, beispielsweise als Ethernet, Wide Area Network, Smart Meter Gateway, Bluetooth oder WLAN.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: erste Energieinformation
- 11: erstes Energiesystem
- 12: zweites Energiesystem
- 20: zweite Energieinformation
- 30: gebündelte Energieinformation
- 31: übergeordnetes Energiesystem
- 40: Steuerungsplan
- 41: oberer Steuerungsplan
- 50: Energienetzsystemebene

- 100: Verfahren
- 110: Bündeln
- 120: Erstellen
- 121: Versenden
- 122: Empfangen
- 123: Erstellen
- 130: Steuern

- 200: Steuerungssystem
- 210: Steuerungseinheit
- 220: obere Steuerungseinheit
- 230: Kommunikationsschnittstelle

## Patentansprüche

1. Verfahren (100) zur Koordination von Energiesystemen (11, 12), umfassend:
- Bündeln (110) von zumindest zwei Energieinformationen (10, 20) zu einer gebündelten Energieinformation (30) eines übergeordneten Energiesystems (31), wobei die zumindest zwei Energieinformationen (10, 20) jeweils zumindest eine Energiemenge umfassen, die durch zumindest ein erstes und zweites Energiesystem (11, 12) innerhalb eines Zeitfensters erzeugt und/oder verbraucht werden kann,
- Erstellen (120) eines Steuerungsplans (40), wobei der Steuerungsplan (40) umfasst, wie viel Energie das übergeordnete Energiesystem (31) innerhalb des Zeitfensters erzeugt und/oder verbraucht,
- Steuern (130) des übergeordneten Energiesystems (31) gemäß des Steuerungsplans (40).

2. Verfahren (100) nach Anspruch 1,
**dadurch gekennzeichnet,**
**dass** das erste Energiesystem (11) sich vom zweiten Energiesystem (12) zumindest bezüglich der Energiemenge, einer Art der Energieerzeugung, oder einer Energienetzsystemebene (50) unterscheidet.

3. Verfahren (100) nach Anspruch 2,
**dadurch gekennzeichnet, dass** die Energienetzsystemebene (50) eine Stromnetzsystemebene ist, wobei eine Stromnetzsystemebene als ein Niederspannungsnetz, ein Mittelspannungsnetz, ein Hochspannungsnetz oder ein Höchstspannungsnetz ausgeführt ist.

4. Verfahren (100) nach Anspruch 3,
**dadurch gekennzeichnet,**
**dass** der Übergang von einer Energienetzsystemebene (50) zur nächsten immer einen Trafo und/oder ein Umspannwerk aufweist.

5. Verfahren (100) nach einem der vorhergehenden Ansprüche,
**dadurch gekennzeichnet,**
**dass** ein Versenden (121) des Steuerungsplans (40), insbesondere an eine obere Steuerungseinheit (220), von einer Steuerungseinheit (210) vorgesehen ist.

6. Verfahren (100) nach einem der vorhergehenden Ansprüche,
**dadurch gekennzeichnet,**
**dass** ein Steuern (130) einer Steuerungseinheit (210) durch eine obere Steuerungseinheit (220) vorgesehen ist.

7. Verfahren (100) nach einem der vorhergehenden Ansprüche,
**dadurch gekennzeichnet,**
**dass** die Energieinformation (10, 20) und/oder die gebündelte Energieinformation (30) zumindest eine erweiterte Energieinformation umfasst, wobei insbesondere die erweiterte Energieinformation zumindest ein Flexibilitätspotential, einen erwarteten Prognosefehler, einen Verlauf der erzeugten und/oder verbrauchten Energiemenge innerhalb des Zeitfensters, oder eine Netzrandbedingung umfasst.

8. Verfahren (100) nach Anspruch 7,
**dadurch gekennzeichnet,**
**dass** das Flexibilitätspotential angibt, wie viel Energie bereitgestellt oder verbraucht wird, wobei abhängig von dem Flexibilitätspotential eine Flotte von Elektrofahrzeugen bei mittlerem Ladestatus entweder geladen oder entladen wird.

9. Verfahren (100) nach einem der vorhergehenden Ansprüche,
**dadurch gekennzeichnet,**
**dass** das Steuern (130) zumindest durch diejenige Steuerungseinheit (210, 220) erfolgt, welche innerhalb einer Hierarchie von Steuerungseinheiten (210, 220), welche gebildet wird durch ein Versenden (121) des Steuerungsplans (40) von einer unteren Steuerungseinheit (210) an eine obere Steuerungseinheit (220), am höchsten angeordnet ist.

10. Verfahren (100) nach einem der vorhergehenden Ansprüche,
**dadurch gekennzeichnet,**
**dass** ein Empfangen (122) des Steuerungsplans (40) durch eine obere Steuerungseinheit (220) und/oder ein Erstellen (123) eines oberen Steuerungsplans (41) vorgesehen ist,
wobei der obere Steuerungsplan (41) zumindest einen Steuerungsplan (40), insbesondere zumindest zwei Steuerungspläne (40) von unterschiedlichen Steuerungseinheiten (210, 220), berücksichtigt.

11. Verfahren (100) nach einem der vorhergehenden Ansprüche,
**dadurch gekennzeichnet,**
**dass** der Steuerungsplan Anweisungen an das übergeordnete Energiesystem und/oder das erste und/oder zweite Energiesystem umfasst, insbesondere für ein Starten und/oder Stoppen eines Energieverbrauchs und/oder einer Energieerzeugung.

12. Steuerungssystem (200) für die Steuerung von Energiesystemen (11, 12), aufweisend:
- eine Steuerungseinheit (210), die dazu ausgeführt ist,
- zumindest zwei Energieinformationen (10, 20) zu einer gebündelten Energieinformation (30) eines übergeordneten Energiesystems (31) zu Bündeln (110), wobei die zumindest zwei Energieinformationen (10, 20) jeweils zumindest eine Energiemenge umfassen, die durch zumindest ein erstes und zweites Energiesystem (11, 12) innerhalb eines Zeitfensters erzeugt und/oder verbraucht werden kann,
- einen Steuerungsplan (40) zu erstellen (120), wobei der Steuerungsplan (40) umfasst, wie viel Energie das übergeordnete Energiesystem (31) innerhalb des Zeitfensters erzeugt und/oder verbraucht, und
- den Steuerungsplan (40) an eine obere Steuerungseinheit (220) zu versenden (121), sowie
- eine obere Steuerungseinheit (220), die dazu ausgeführt ist, den Steuerungsplan (40) zu empfangen (122) und einen oberen Steuerungsplan (41) zu erstellen (123).

13. Steuerungssystem (200) nach Anspruch 12,
**dadurch gekennzeichnet,**
**dass** die Steuerungseinheit (210) und/oder die obere Steuerungseinheit (220) eine Kommunikationsschnittstelle (230) aufweist, welche dazu ausgeführt ist, eine Kommunikation zwischen der Steuerungseinheit (210) und der oberen Steuerungseinheit (220) bereitzustellen.

14. Computerprogrammprodukt, umfassend Befehle, die bei der Ausführung des Programms durch einen Computer, insbesondere durch eine Steuerungseinheit (210) und/oder die obere Steuerungseinheit (220) eines Steuerungssystems (200) nach einem der Ansprüche 12 oder 13, diesen veranlassen, ein Verfahren (100) nach einem der Ansprüche 1 bis 11 auszuführen.

15. Computerlesbares Speichermedium, umfassend Befehle, die bei der Ausführung durch einen Computer, insbesondere durch eine Steuerungseinheit (210) und/oder die obere Steuerungseinheit (220) eines Steuerungssystems (200) nach einem der Ansprüche 12 oder 13, diesen veranlassen, ein Verfahren (100) nach einem der Ansprüche 1 bis 11 auszuführen.
